**Europäisches Patentamt**

**European Patent Office**

**Office européen des brevets**

(19)

(11) Veröffentlichungsnummer : **0 676 478 A1**

# (12) EUROPÄISCHE PATENTANMELDUNG

(21) Anmeldenummer : **95890081.3**

(22) Anmeldetag : **10.04.95**

(51) Int. Cl.$^6$ : **C22B 7/02, C21B 13/14**

(30) Priorität : **11.04.94 AT 739/94**

(43) Veröffentlichungstag der Anmeldung :
**11.10.95 Patentblatt 95/41**

(84) Benannte Vertragsstaaten :
**BE DE FR GB IT LU NL SE**

(71) Anmelder : **DEUTSCHE VOEST-ALPINE INDUSTRIEANLAGENBAU GMBH**
**Neusser Strasse 111**
**D-40219 Düsseldorf (DE)**

(72) Erfinder : **Grünbacher, Herbert**
**Stein 24**
**A-4502 St. Marien (AT)**
Erfinder : **Kepplinger, Leopold-Werner, Prof. Dipl.-Ing. Dr.**
**Lahholdstrasse 7**
**A-4060 Leonding (AT)**
Erfinder : **Reufer, Franz, Dr.-Ing.**
**Possbergweg 81**
**D-40629 Düsseldorf (DE)**
Erfinder : **Schrey, Günter, Dipl.-Ing. Dr.**
**Nöbauerstrasse 54**
**A-4040 Linz (AT)**

(74) Vertreter : **Kopecky, Helmut**
**Zollergasse 37/5,**
**Postfach 201**
**A-1070 Wien (AT)**

(54) **Verfahren zum Herstellen einer Eisenschmelze.**

(57) Bei einem Verfahren zum Herstellen einer Eisenschmelze wird Eisenerz (4) in einer Direktreduktionszone (2) zu Eisenschwamm reduziert, wobei der Eisenschwamm in eine Einschmelzvergasungszone (15) unter Zufuhr von kohlenstoffhältigem Material unter Vergasung des kohlenstoffhältigen Materials zu Reduktionsgas und unter Bildung einer Schlacke (17) eingeschmolzen wird und das Reduktionsgas in die Direktreduktionszone (2) eingeleitet, dort umgesetzt und als Topgas abgezogen wird, wobei das Reduktionsgas und/oder das Topgas einer Wäsche unterzogen und die bei der Wäsche abgeschiedenen Schlämme mit Bindemittel (30) und Kohlestaub versetzt und sodann agglomeriert werden.

Um bei einer Direktreduktion von Eisenerz (4) anfallende Schlämme dem Direktreduktionsverfahren in großer Menge wiederum zuführen zu können, ohne daß der Prozeßablrluf der Direktreduktion in irgendeiner Weise gestört wird,

• werden die bei der Wäsche abgeschiedenen Schlämme vor einer Weiterbehandlung auf einen Restfeuchtegehalt entwässert,

• werden danach den Schlämmen Kohlestaub und als Bindemittel Brantkalk (30) zugesetzt,

• werden die Schlämme anschließend granuliert und

• wird das so gebildete Granulat der Einschmelzvergasungszone (15) unter Erhöhung der Basizität der Schlacke (17) auf maximal 1,25, vorzugsweise auf maximal 1,20, zugeführt.

EP 0 676 478 A1

Die Erfindung betrifft ein Verfahren zum Herstellen einer Eisenschmelze, bei dem Eisenerz in einer Direktreduktionszone zu Eisenschwamm reduziert, der Eisenschwamm in eine Einschmelzvergasungszone unter Zufuhr von kohlenstoffhältigem Material unter Vergasung des kohlenstoffhältigen Materials zu Reduktionsgas und unter Bildung einer Schlacke eingeschmolzen wird und das Reduktionsgas in die Direktreduktionszone eingeleitet, dort umgesetzt und als Topgas abgezogen wird, wobei das Reduktionsgas und/oder das Topgas einer Wäsche unterzogen und die bei der Wäsche abgeschiedenen Schlämme mit Bindemittel und Kohlestaub versetzt und sodann agglomeriert werden.

Ein Verfahren dieser Art ist aus der AT-B - 376.241 bekannt. Hierbei werden das Reduktionsgas nach einer Feststoffabscheidung sowie das aus der Direktreduktionszone austretende Topgas in Zyklonen einer Gaswäsche unterzogen und die dabei abgeschiedenen Schlämme mit Bindemittel, gebildet von Eisenoxidstaub, Hartpech, Bitumen oder bituminöser Braunkohle, versetzt, heiß brikettiert und der Einschmelzvergasungszone zugeführt, wobei der Eisenoxidstaub aus einer Gichtgasreinigungsanlage stammt.

Die bei der Feststoffabscheidung anfallenden Feststoffe - in der Hauptsache Staubkohle - werden nahezu zur Gänze in den unteren Bereich der Einschmelzvergasungszone rückgeführt; ein geringer Teil der Staubkohle wird mit den mit Bindemittel versetzten Schlämmen vermischt und gemeinsam mit diesen brikettiert.

Nachteilig ist jedoch hierbei, daß infolge des erhöhten Einbringens von Eisenoxiden im Einschmelzvergaser Reduktionsarbeit geleistet werden muß, um das Eisenoxid zu reduzieren, wodurch für den Einschmelzvorgang benötigte Energie diesem entzogen wird und eine Störung des in der Einschmelzvergasungszone ablaufenden Prozesses stattfindet. Weiters stellt die genannte Heißbrikettierung im Hinblick auf die Investitions- und Betriebskosten eine aufwendige Lösung dar.

Aus der DE-A - 41 23 626 ist es bekannt, Hüttenreststoffe zu agglomerieren, u.zw. unter Zuhilfenahme von Bindemitteln, Schlackenbildnern und Reduktionsmitteln, und die Agglomerate in den oberen Möllerbereich eines Schmelzaggregates einzubringen, wobei die Vorwärmung und Trocknung der Agglomerate in diesem Möllerbereich des Schmelzaggregates erfolgt. Der Möller durchsetzt das Schmelzaggregat nach dem Gegenstromprinzip, wobei er zunächst in einen im Inneren des Schmelzaggregates vorgesehenen Reduktionsbereich gelangt und anschließend im unteren Bereich des Schmelzaggregates geschmolzen wird. Dieses bekannte Verfahren ist insofern energieaufwendig, als die Abfall- bzw. Reststoffe im Schmelzaggregat getrocknet und gesintert werden müssen und so den im Schmelzaggregat stattfindenden Prozeß negativ beeinflussen.

Auch hier muß infolge des Einbringens von Eisenoxiden (wie z.B. Zunder) im Einschmelzvergaser Reduktionsarbeit geleistet werden, wozu ein weiterer, erheblicher Energieaufwand notwendig ist. Weiters wird vorgeschlagen, als Bindemittel z.B. Sulfitablaugen einzusetzen, was jedoch zu einem unerwünschten Schwefeleintrag in den Prozeß führt.

Die Erfindung bezweckt die Vermeidung dieser Nachteile und stellt sich die Aufgabe, die bei einer Direktreduktion von Eisenerz anfallenden Schlämme dem Direktreduktionsverfahren in möglichst großer Menge, d.h. in einer Menge von etwa 90 % der Gesamtmenge der Schlämme, wiederum zuzuführen, ohne daß der Prozeßablauf der Direktreduktion in irgendeiner Weise beeinflußt wird. Insbesondere soll keine Änderung der Rohstoff- und Zuschlagsmengen erforderlich sein.

Diese Aufgabe wird erfindungsgemäß durch die Kombination folgender Merkmale gelöst:
- daß die bei der Wäsche abgeschiedenen Schlämme vor einer Weiterbehandlung auf einen Restfeuchtegehalt entwässert werden,
- daß danach den Schlämmen Kohlestaub und als Bindemittel Brantkalk zugesetzt werden,
- daß die Schlämme anschließend granuliert werden und
- daß das so gebildete Granulat der Einschmelzvergasungszone unter Erhöhung der Basizität der Schlacke auf maximal 1,25, vorzugsweise auf maximal 1,20, zugeführt wird.

Vorzugsweise werden die Schlämme vor einer Weiterbehandlung auf einen Restfeuchtegehalt von 25 bis 50 %, vorzugsweise 35 bis 40 %, entwässert. Hierdurch kann ein diesen Restfeuchtegehalt aufweisender Schlamm direkt in einen Mischgranulator aufgegeben werden. Der bevorzugte Bereich des Restfeuchtegehalts hat einen mengenmäßig günstigen Verbrauch an Brantkalk zur Folge. Ohne eine solche Entwässerung wäre zur Erzielung einer ausreichenden Granulatfestigkeit ein wesentlich höherer Verbrauch an Brantkalk notwendig.

Zweckmäßig wird den entwässerten Schlämmen Kohlestaub in einer Menge von bis zu 30 %, vorzugsweise bis zu 25 %, der entwässerten Schlammenge zugesetzt. Kohlestaub in der genannten Menge hat einen positiven Einfluß auf die Festigkeit der Granulate. Hierbei hat die Verwendung von Kohlestaub aus Entstaubungseinrichtungen einer Kohletrocknungsanlage, welche in das vorliegende Konzept zur Herstellung einer Eisenschmelze bzw. von Roheisen und/oder Stahlvorprodukten integriert ist, einen besonderen Vorteil, u.zw. aus Gründen des Umweltschutzes und der Vermeidung von Transport- und Deponiekosten für den Kohlestaub. Weiters hat das Beifügen des Kohlestaubs zum entwässerten Schlamm den Vorteil, daß die danach im Mischgranulator gebildeten Granulate einen beträchtlichen Kohlenstoffgehalt aufweisen, wobei der Kohlestaub als Energieträger nach dem Einbringen der Granulate in die Einschmelzvergasungszone einen positiven energetischen Beitrag liefert.

Gemäß einer bevorzugten Variante werden die Granulate vor Zuführen der Einschmelzvergasungszone unter Einwirkung eines $CO_2$-hältigen Rauchgases mit einer Carbonatschicht versehen. Eine solche Carbonatschicht erhöht sowohl die Festigkeit für den Transport als auch die Zerfallfestigkeit in der Einschmelzvergasungszone.

Zweckmäßig wird die Bildung einer Carbonatschicht für die Granulate in einer Kohletrocknungsanlage durchgeführt.

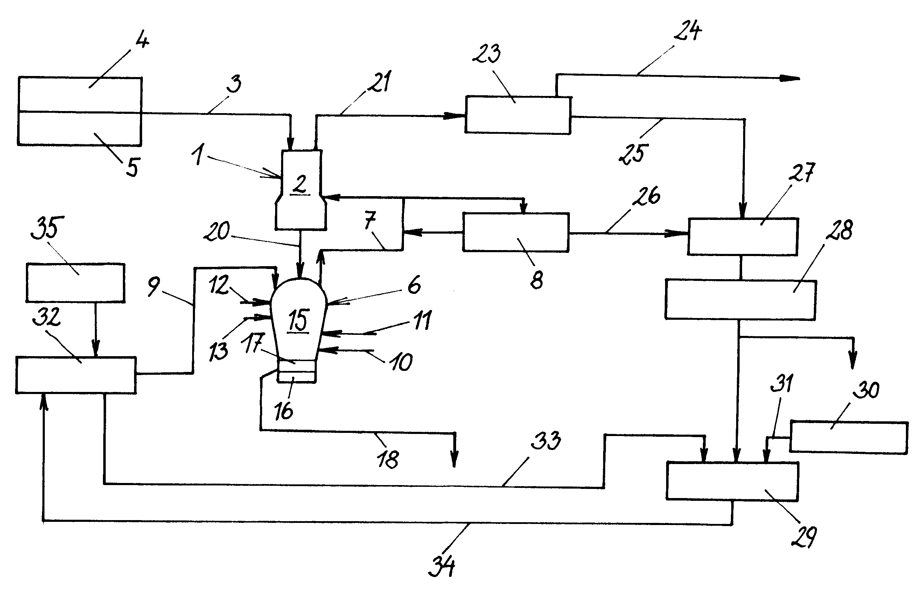

Die Erfindung ist nachfolgend anhand eines in der Zeichnung dargestellten Ausführungsbeispieles näher erläutert, wobei die Zeichnung in schematischer Darstellung eine Anlage zur Durchführung des erfindungsgemäßen Verfahrens veranschaulicht.

In eine als Schachtofen 1 ausgebildete Direktreduktionseinrichtung, d.h. in deren Direktreduktionszone 2, werden von oben über eine Zuleitung 3 stückige eisenoxidhältige Einsatzstoffe 4, wie Erz, gegebenenfalls zusammen mit ungebrannten Zuschlägen 5, chargiert. Der Schachtofen 1 steht mit einem Einschmelzvergaser 6 in Verbindung, in dem aus Kohlenstoffträgern und sauerstoffhältigem Gas ein Reduktionsgas erzeugt wird, welches über eine Zuleitung 7 dem Schachtofen 1 zugeführt wird, wobei in der Zuleitung 7 eine Gasreinigungs- und eine Gaskühlungseinrichtung 8, die als Wäscher ausgebildet ist, vorgesehen sind.

Der Einschmelzvergaser 6 weist eine Zuführung 9 für feste, stückige Kohlenstoffträger, gegebenenfalls mehrere Zuleitungen 10, 11 für sauerstoffhältige Gase und Zuleitungen 12, 13 für bei Raumtemperatur flüssige oder gasförmige Kohlenstoffträger, wie Kohlenwasserstoffe, sowie für gebrannte Zuschläge auf. In dem Einschmelzvergaser 6 sammelt sich unterhalb der Einschmelzvergasungszone 15 schmelzflüssiges Roheisen 16 und schmelzflüssige Schlacke 17, die über einen Abstich 18 abgestochen werden.

Die im Schachtofen 1 in der Direktreduktionszone 2 zu Eisenschwamm reduzierten stückigen Einsatzstoffe werden dem Einschmelzvergaser 6 über eine oder mehrere Leitungen 20 zugeführt, beispielsweise mittels Austragsschnecken. An dem oberen Teil des Schachtofens 1 schließt eine Ableitung 21 für das in der Direktreduktionszone 2 entstehende Topgas an. Dieses Topgas wird einer Gasreinigungseinrichtung 23, die ebenfalls als Wäscher ausgebildet ist, zugeleitet und steht danach über die Exportgasleitung 24 einer weiteren Verwendung zur Verfügung.

Erfindungsgemäß werden beim Vergasungs- und Einschmelzprozeß sowie beim Reduktionsprozeß anfallende Abfallstoffe wieder in den eisenerzeugenden Prozeß zurückgeführt:

Die in den Wäschern 8 und 23 anfallenden Schlammwässer werden über Schlammwasser-Leitungen 25 und 26 einem Eindicker 27 und anschließend einer Entwässerungseinrichtung 28, vorzugsweise einer Dekanterzentrifuge 28, zugeführt, in der die Schlämme auf einen Restfeuchtegehalt von 25 bis 50 %, vorzugsweise von 35 bis 40 %, entwässert werden. Der entwässerte Schlamm wird in einer Menge von 90 %, vorzugsweise bis 95 %, einer Granulationseinrichtung 29, wie einem Mischgranulator 29, zugeführt. Ein Teil des entwässerten Schlamms, nämlich 5 bis 10 %, werden ausgeschleust und auf Deponie gelegt. Auf diese Weise kann eine Aufschaukelung unerwünschter Schlamminhaltsstoffe, wie z.B. Schwermetallverbindungen, verhindert werden.

In die Granulationseinrichtung 29 münden eine Brantkalk 30 zuführende Leitung 31 sowie eine Kohlefilterstaub, der aus einer Kohletrocknungsanlage 32 stammt, zuführende Leitung 33. Die in der Granulationseinrichtung 29 gebildeten Granulate werden über eine Fördereinrichtung 34 der Kohletrocknungsanlage 32 zugeführt und gemeinsam mit der in der Kohletrocknungsanlage 32 getrockneten Kohle 35 über die Zuführung 9 dem Einschmelzvergaser 6 zugeführt.

Gemäß einem Ausführungsbeispiel wurde aus der Gasreinigungseinrichtung 23 und aus der Gaskühlungseinrichtung 8 stammendes Schlammwasser mit einem Feststoffgehalt von ca. 100 bis 200 g/l, wobei die Feststoffe zu ca. 30 % aus Kohlenstoff, ca 30 % aus Eisenoxiden und der Rest aus Aschebestandteilen, vornämlich Aluminium- und Siliciumoxiden sowie Calcium- und Magnesiumhydroxiden neben in geringen Mengen vorkommenden weiteren Metalloxiden bestehen, mit Hilfe der Dekanterzentrifuge 28 entwässert. Ca. 850 kg des erhaltenen Schlammes mit einem Restfeuchtegehalt von 38 % wurden direkt dem Mischgranulator 29 aufgegeben. Dazu wurden noch ca. 200 kg Kohle und ca. 200 kg Brantkalk in den Mischgranulator 29 eingewogen.

Nach Mischen und Granulieren wurden ca. 1.250 kg Granulate mit einem Wassergehalt von ca. 20 % aus dem Mischgranulator 29 ausgetragen und der Kohletrocknungsanlage 32 zugeführt. Dort erfolgte unter Einwirkung eines $CO_2$-hältigen Rauchgases eine Trocknung der Granulate auf einen Restfeuchtegehalt von maximal 5 %. Hierbei erhielten die Granulate auch eine oberflächliche Carbonatschicht.

Im Einschmelzvergaser 6 wird die Schlackenbasizität $B_4$, definiert durch

$$B_4 = \frac{CaO + MgO}{SiO_2 + Al_2O_3}$$

üblicherweise auf den Wert 1,15 eingestellt Dabei sind eine ausreichende Viskosität und eine ausreichende Entschwefelungseigenschaft der Schlacke gewährleistet. Mit steigender Schlackenbasizität $B_4$ nimmt zwar die Neigung, Schwefel aufnehmen zu können, zu, jedoch steigt auch die Zähigkeit der Schlacke. Eine erhöhte Zähigkeit der Schlacke ist beim Schlackenabstich unerwünscht.

Bei Rückführung der Schlämme in den Einschmelzvergaser in Form von Granulaten in der Größenordnung von 10 % des Kohleeinsatzes steigt die Schlackenbasizität $B_4$ erfindungsgemäß auf maximal 1,20.

Bis zu diesem Wert ist keine Änderung der Rohstoff- und Zuschlagsmengen erforderlich; auch wird der Prozeßablauf nicht beeinflußt. D.h. daß dem Einschmelzvergaser Granulate bis zu 10 % des Kohleeinsatzes aufgegeben werden können, ohne daß der Prozeß sowie die Mengen der Rohstoffe und Zuschläge variiert werden müssen.

Auf diese Weise können - je nach Schwermetallbelastung des Schlammes - 90 bis 95 % der gesamten anfallenden Schlammenge wieder dem Prozeß zugeführt werden.

**Patentansprüche**

1. Verfahren zum Herstellen einer Eisenschmelze, bei dem Eisenerz (4) in einer Direktreduktionszone (2) zu Eisenschwamm reduziert, der Eisenschwamm in eine Einschmelzvergasungszone (15) unter Zufuhr von kohlenstoffhältigem Material unter Vergasung des kohlenstoffhältigen Materials zu Reduktionsgas und unter Bildung einer Schlacke (17) eingeschmolzen wird und das Reduktionsgas in die Direktreduktionszone (2) eingeleitet, dort umgesetzt und als Topgas abgezogen wird, wobei das Reduktionsgas und/oder das Topgas einer Wäsche unterzogen und die bei der Wäsche abgeschiedenen Schlämme mit Bindemittel (30) und Kohlestaub versetzt und sodann agglomeriert werden, gekennzeichnet durch die Kombination folgender Merkmale:
   - daß die bei der Wäsche abgeschiedenen Schlämme vor einer Weiterbehandlung auf einen Restfeuchtegehalt entwässert werden,
   - daß danach den Schlämmen Kohlestaub und als Bindemittel Brantkalk (30) zugesetzt werden,
   - daß die Schlämme anschließend granuliert werden und
   - daß das so gebildete Granulat der Einschmelzvergasungszone (15) unter Erhöhung der Basizität der Schlacke (17) auf maximal 1,25, vorzugsweise auf maximal 1,20, zugeführt wird.

2. Verfahren nach Anspruch 1, dadurch gekennzeichnet, daß die Schlämme vor einer Weiterbehandlung auf einen Restfeuchtegehalt von 25 bis 50 %, vorzugsweise 35 bis 40 %, entwässert werden.

3. Verfahren nach Anspruch 1 oder 2, dadurch gekennzeichnet, daß den entwässerten Schlämmen Kohlestaub in einer Menge von bis zu 30 %, vorzugsweise bis zu 25 %, der entwässerten Schlammenge zugesetzt wird.

4. Verfahren nach einem oder mehreren der Ansprüche 1 bis 3, dadurch gekennzeichnet, daß die Granulate vor Zuführen der Einschmelzvergasungszone (15) unter Einwirkung eines $CO_2$-hältigen Rauchgases mit einer Carbonatschicht versehen werden.

5. Verfahren nach Anspruch 4, dadurch gekennzeichnet, daß die Bildung einer Carbonatschicht für die Granulate in einer Kohletrocknungsanlage (32) durchgeführt wird.

EP 0 676 478 A1

EP 0 676 478 A1

**Europäisches Patentamt**

# EUROPÄISCHER RECHERCHENBERICHT

EP 95 89 0081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,P | EP-A-0 623 684 (DEUTSCHE VOEST-ALPINE INDUSTRIEANLAGENBAU) <br> * Ansprüche 4-8 * <br> --- | 1 | C22B7/02 <br> C21B13/14 |
| A,D | AT-B-376 241 (VOEST-ALPINE) <br> * Anspruch 1 * <br> --- | 1 | |
| A,D | DE-A-41 23 626 (INTERCEPT ET AL.) <br> * Anspruch 1 * <br> --- | 1 | |
| A | DE-B-20 44 669 (ITALSIDER) <br> * Ansprüche 1-6 * <br> ----- | 1 | |
| | | | **RECHERCHIERTE SACHGEBIETE (Int.Cl.6)** <br><br> C22B <br> C21B |

Der vorliegende Recherchenbericht wurde für alle Patentansprüche erstellt

| Recherchenort | Abschlußdatum der Recherche | Prüfer |
|---|---|---|
| BERLIN | 24.Mai 1995 | Sutor, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

6